# FASCICULE DE BREVET EUROPEEN

(11) **EP 4 435 164 B1**
(45) Date de publication et mention de la délivrance du brevet: **04.11.2026**
(21) Numéro de dépôt: 24165014.2
(22) Date de dépôt: 21.03.2024
(51) Int. Cl.: D04H 1/4209, B32B 5/26, B32B 17/02, D04H 1/4218, D04H 1/593, D04H 13/00, E04B 1/74, E04B 1/88

(54) **MATELAS ISOLANT OBTENU PAR UNE SUPERPOSITION DE COUCHES DE FIBRES**
ISOLIERMATTE HERGESTELLT DURCH ÜBERLAGERN VON FASERSCHICHTEN
INSULATION BLANKET OBTAINED BY LAYING UP FIBRE LAYERS

(30) Priorité: 24.03.2023 FR 2302827
(43) Date de publication de la demande: 25.09.2024
(73) Titulaire: SAINT-GOBAIN ISOVER, 92400 Courbevoie (FR)
(72) Inventeur: PAILLARD, Guillaume, 60600 CLERMONT (FR)
(74) Mandataire: Ex Materia

(56) Documents cités:
- EP-B1- 1 064 437
- EP-B1- 1 950 184
- DE-A1- 3 501 897
- US-A1- 2009 188 091
- US-A1- 2017 210 094

## Description

La présente invention concerne le domaine des matériaux de construction, et plus particulièrement le domaine des matériaux de construction formés d'un matelas isolant, formé par exemple de fibres de verre ou de fibres végétales. De tels matériaux de construction sont notamment utilisés pour assurer l'isolation thermique et/ou acoustique.

Les matelas isolants formés de fibres minérales ou végétales sont couramment utilisés comme matériaux d'isolation destinés à assurer l'isolation thermique et/ou acoustique, par exemple lors de la construction de bâtiments. Les propriétés isolantes de ces matelas isolants sont obtenues, notamment, par la capacité desdits matelas à emprisonner de l'air de façon stable et immobile en leur sein.

Les matelas isolants sont obtenus par le passage en étuve d'un tapis de fibres, minérales ou végétales, constitué sur un dispositif convoyeur en amont de l'étuve. Ce tapis de fibres est formé, par exemple d'un mélange de fibres de verre, vierges ou recyclées, ou de fibres de bois enchevêtrées les unes avec les autres, et d'éléments liants destinés à lier les fibres entre elles lors du passage de l'étuve.

Il est connu d'améliorer les performances d'isolation thermique et/ou acoustique d'un matelas isolant en augmentant l'épaisseur de ce dernier, ce qui permet notamment d'augmenter la quantité d'air immobilisé de façon stable au sein du matelas isolant, cette quantité d'air immobilisé ayant un effet limitatif sur la propagation de la chaleur et du son au sein du matelas.

L'augmentation de l'épaisseur des matelas isolants s'accompagne toutefois de différents problèmes que les fabricants doivent prendre en compte parmi lesquels des problèmes d'homogénéité de répartition des fibres ou encore des problèmes de création de ponts thermiques par connexion des fibres les unes aux autres dans l'épaisseur du matelas isolant. Le document US2009188091 divulgue un matelas isolant formé d'une superposition de couches, dans un contexte d'utilisation de fibres synthétiques. Les documents US 20171210094 A1, DE 35 01 897 A1, EP 1 950 184 B1 et EP 1 064 437 B1 divulguent des matelas isolants formés par superposition de couches réalisées à partir de fibres minérales ou végétales.

La présente invention s'inscrit dans ce contexte et vise à optimiser les propriétés isolantes d'un matelas isolant comprenant des fibres minérales et/ou végétales. Cette optimisation est obtenue en augmentant la quantité d'air piégé de façon stable dans le matelas isolant, en assurant une répartition stratifiée des fibres et en limitant la présence de fibres orientées de façon sécante au plan d'allongement du matelas. En effet, une telle orientation participe à générer des ponts thermiques dans l'épaisseur du matelas qui participent à la propagation de la chaleur par conduction thermique au sein du matelas de fibres.

Ainsi, la présente invention a pour objet un matelas isolant formé d'une superposition de couches formées d'une pluralité de fibres minérales et/ou végétales liées les unes aux autres au moyen d'un élément liant, le matelas isolant étant formé d'une superposition d'au moins 30 couches.

La superposition de couches permet d'immobiliser de façon stable de l'air entre deux couches. Une telle superposition de couches permet ainsi d'améliorer les propriétés isolantes d'un matelas isolant formé par cette superposition de couches en limitant la formation de ponts thermiques entre deux couches adjacentes. Cette limitation de la formation de ponts thermiques au sein du matelas isolant est réalisée par une orientation des fibres de façon laminaire dans un plan d'allongement dudit matelas isolant. En d'autres termes, chaque fibre s'étend dans un unique plan d'extension et le matelas isolant est formé d'une superposition de plans d'extension parallèles les uns aux autres. On comprend que plus le nombre de couches est important et meilleures seront les propriétés isolantes du matelas isolant.

Le matelas isolant présente un grammage spécifique et une épaisseur donnée, ces caractéristiques permettant d'obtenir, pour le produit fini, des performances d'isolation acoustique ou thermique correspondant à ce qui est attendu par l'utilisateur.

Selon l'invention, afin d'obtenir le matelas isolant présentant ces valeurs spécifiques de grammage et d'épaisseur, on choisit une couche présentant un grammage permettant de superposer au moins 30 couches. Le nombre de couches est choisi pour que le grammage du matelas isolant soit atteint précisément, avec cette contrainte d'avoir au moins 30 couches. On comprend que le grammage du matelas isolant est égal au grammage moyen d'une couche multiplié par le nombre de couches du matelas isolant. À titre d'exemple illustratif, si le grammage moyen d'une couche est de 10g.m⁻², alors le grammage de trente couches avant et après cuisson de la superposition de couches pour former le matelas isolant sera sensiblement égal à 300g.m⁻². Il convient de noter qu'il peut y avoir une légère perte de grammage liée à l'évaporation de substances volatiles mais ceci est peu impactant.

Le choix du nombre de couches est par ailleurs considéré en fonction de l'épaisseur à respecter du matelas isolant. L'épaisseur du matelas isolant est égale à la somme de l'épaisseur moyenne d'une couche et de l'épaisseur d'une strate d'air entre deux couches adjacentes, multipliée par le nombre de couches du matelas isolant, et on s'assure que l'épaisseur moyenne d'une couche multipliée par le nombre de couches au cours du process de fabrication du matelas isolant, soit au moins égale, le cas échéant supérieure à l'épaisseur à respecter du matelas isolant.

En d'autres termes, le nombre de couches choisi pour constituer le matelas doit être supérieur à 30 couches, pour optimiser les performances isolantes, et ce nombre doit permettre d'atteindre le grammage exact du matelas isolant dès que toutes les couches sont superposées les unes sur les autres au cours du procédé de fabrication du matelas isolant, tout en permettant d'atteindre ou dépasser l'épaisseur à respecter du matelas isolant lorsque toutes les couches sont superposées les unes sur les autres au cours du procédé de fabrication du matelas isolant.

Le nombre de couches est choisi pour arriver exactement au grammage du matelas isolant et pour arriver au moins à l'épaisseur à respecter de ce matelas isolant, avec un nombre de couches au moins supérieur à la valeur seuil déterminée par les inventeurs. La valeur seuil est définie pour avoir la meilleure isolation possible, en multipliant les strates d'air entre des couches plates au sein desquelles les fibres sont agencées à plat, sans chevauchement les unes des autres et donc sans risque qu'une fibre dépassant de la couche vienne faire un pont thermique avec une couche adjacente à travers une strate d'air. Ici, la valeur seuil est égale à 30 couches. Il convient de noter que si plusieurs grammages possibles de couches permettent d'atteindre précisément le grammage et l'épaisseur à respecter du matelas isolant, avec un nombre de couches suffisant, il est préféré de choisir la couche avec le plus haut grammage, et donc la plus grande épaisseur, pour s'assurer de la tenue mécanique.

Dans ce contexte, les inventeurs ont pu mettre en évidence que la valeur seuil de 30 couches était un bon compromis entre une couche de faible grammage permettant de superposer un nombre de couches important pour un matelas isolant donné, c'est-à-dire pour un matelas isolant avec un grammage défini à obtenir en fin de procédé, et la réalité industrielle. Des couches présentant un grammage de l'ordre de 10g.m⁻², 15g.m⁻², 25g.m⁻² ou encore 30g.m⁻² peuvent permettre la mise en œuvre de l'invention pour obtenir une grande gamme de matelas isolant, compris entre 400g.m⁻² et 4kg.m⁻² par exemple, en respectant cette valeur seuil de 30 couches à superposer.

Les propriétés isolantes du matelas isolant sont alors optimales, notamment par le nombre de couches superposées et la quantité d'air ainsi immobilisé de façon stable au sein du matelas, entre chacune des couches adjacentes de ladite superposition d'au moins 30 couches. Par ailleurs, le faible grammage des couches permet une répartition des fibres au sein de la couche qui évite les chevauchements des fibres au sein de cette couche, ce qui permet la réduction du nombre de ponts thermiques susceptibles de joindre deux couches adjacentes et ce qui améliore ainsi les performances d'isolation.

Les fibres liées les unes aux autres au moyen d'un élément liant sont des fibres minérales et/ou végétales. On se distingue en cela de matelas isolants comportant principalement des fibres synthétiques. Plus particulièrement, les fibres sont de type laine de verre ou laine de roche.

Selon une caractéristique de l'invention, le matelas isolant est formé d'une superposition d'au moins 50 couches. Ce nombre peut notamment être atteint par la réalisation de couches à faible grammage. Dans ce contexte, et conformément à ce qui a été évoqué précédemment, on peut prévoir un nombre de couches superposées, pour obtenir le grammage à respecter du matelas isolant, qui est plus important que celui dans les matelas isolants de l'art antérieur. À titre d'exemple, pour une valeur de grammage du matelas isolant de 1kg.m⁻², le nombre de couches superposées est de 50 couches si le grammage moyen d'une couche est de l'ordre de 20g.m⁻² et de 100 couches si le grammage moyen d'une couche est de l'ordre de 10g.m⁻².

Selon une caractéristique de l'invention, le grammage moyen d'une couche est tel que le nombre de couches du matelas isolant multiplié par ce grammage moyen est égale au grammage à respecter du matelas isolant, l'épaisseur résultant de la superposition de couches étant égale ou supérieure à l'épaisseur à respecter du matelas isolant.

Selon une caractéristique de l'invention, chaque couche du matelas isolant présente un grammage compris en 8 g.m⁻² et 30 g.m⁻². Tel qu'évoqué précédemment, le grammage du matelas isolant est selon l'invention obtenu en considérant le grammage de chaque couche superposée, et plus particulièrement en considérant le grammage moyen des couches et en multipliant ce grammage moyen par le nombre de couches superposées. Un tel grammage des couches formant le matelas isolant permet, pour un grammage donné du matelas isolant, de superposer un nombre important de couches. Les inventeurs ont pu constater qu'avec un tel grammage moyen des couches, il est possible d'obtenir le grammage d'un grand nombre de matelas isolants commercialisés sur le marché, avec des performances d'isolation optimisées du fait du nombre important de couches superposées. Ce grand nombre de couches peut impliquer une surépaisseur de la superposition de couches par rapport à l'épaisseur à respecter du matelas isolant, mais cette épaisseur de la superposition de couches peut facilement être ramenée à hauteur de l'épaisseur à respecter du matelas par des moyens de pressage.

Selon une caractéristique de l'invention, chaque couche présente une épaisseur comprise entre 0,05 mm et 2 mm. Cette faible épaisseur des couches formant le matelas isolant est liée au faible grammage de celles-ci, compris selon l'invention entre 8 g.m⁻² et 30 g.m⁻². Pour une surface donnée de la couche, peu de fibres et d'élément liant sont prévus de sorte que ces composants présentent peu de risque de se chevaucher, ce qui permet de contenir l'épaisseur de la couche.

L'épaisseur moyenne d'une couche de la superposition de couches est à considérer pour s'assurer que le nombre de couches choisi, au moins supérieur à 30 selon l'invention pour optimiser les performances d'isolation, soit suffisant pour que l'épaisseur de la superposition de couches soit au moins égale à l'épaisseur à respecter du matelas isolant.

Dans un mode d'obtention particulier d'un matelas isolant selon l'invention, on choisit le nombre de couches à superposer en fonction du grammage des couches à disposition pour atteindre à l'identique le grammage à respecter du matelas isolant. On choisit le nombre de couches, au moins supérieur à 30, pour qu'il soit le plus élevé possible avec des couches présentant toutefois un grammage au moins égal à 8 g.m⁻², pour leur assurer une tenue mécanique lors de la superposition des couches. Dans ce contexte, on s'assure que l'épaisseur de la superposition est supérieure à l'épaisseur à respecter du matelas isolant, et on ajuste l'épaisseur du matelas par des moyens de pressage, avant, pendant ou après un passage en étuve de la superposition de couches pour obtenir le matelas isolant.

Selon une caractéristique de l'invention, chaque couche présente une épaisseur comprise entre 0,1 mm et 1 mm.

Selon une caractéristique de l'invention, l'élément liant est formé d'éléments thermoliants. Les éléments thermoliants permettent d'offrir à chacune des couches formant le matelas isolant une résistance mécanique limitant le risque que les couches se désagrègent, notamment en raison de la fine épaisseur de ces dernières.

Selon une caractéristique de l'invention, le matelas isolant comprend entre 2% et 30% d'éléments thermoliants. En d'autres termes, les éléments thermoliants présents au sein du matelas isolant représentent une masse comprise entre 2% et 30% de la masse totale du matelas isolant.

Selon une caractéristique de l'invention, le matelas isolant comprend moins de 15% d'éléments thermoliants. En d'autres termes, les éléments thermoliants présents au sein du matelas isolant représentent une masse inférieure à 15% de la masse totale du matelas isolant. Notamment, une telle teneur en éléments thermoliants, inférieure à 15%, limite l'utilisation de matière plastique au sein du matelas isolant ce qui présente un avantage en termes de coût et de respect de l'environnement. Il convient de noter que de façon avantageuse chaque couche du matelas isolant comprend une teneur inférieure à 15% d'éléments thermoliants. Il s'agit là encore d'un pourcentage massique, de sorte que la masse d'éléments thermoliants présents dans une couche est inférieure à 15% de la masse totale de ladite couche considérée. Une telle caractéristique permet de former un matelas isolant dont la masse d'éléments thermoliants est, selon l'invention, inférieure à 15% tout en garantissant une certaine homogénéité entre chaque couche.

Selon une caractéristique de l'invention, le matelas isolant comprend entre 3% et 15% d'éléments thermoliants.

Selon une caractéristique de l'invention, le matelas isolant comprend entre 4% et 10% d'éléments thermoliants. En d'autres termes, la teneur en élément liant est comprise entre 4% et 10%, les éléments thermoliants présents au sein du matelas isolant représentant une masse comprise entre 4% et 10% de la masse du matelas isolant. Là encore, tel qu'évoqué précédemment, chaque couche du matelas isolant présente avantageusement une teneur en éléments thermoliants qui est sensiblement égale à la teneur des autres couches du matelas isolant, pour assurer une répartition homogène des éléments thermoliants sur toute l'épaisseur du matelas isolant.

Une telle teneur en éléments thermoliants comprise entre 4% et 10% permet d'offrir à chaque couche, notamment en raison de leur faible épaisseur, une tenue mécanique permettant de ne pas se désagréger. Il convient de noter que l'on entend par « désagréger » que la couche s'effrite et que les fibres se dissocient les unes des autres au sein de ladite couche.

Selon une caractéristique de l'invention, le matelas isolant présente une densité volumique comprise entre 5kg.m⁻³ et 200kg.m⁻³.

Selon une caractéristique de l'invention, le matelas isolant présente une densité volumique comprise entre 5kg.m⁻³ et 40kg.m⁻³.

Selon une caractéristique de l'invention, les fibres présentent une longueur maximale de 20 mm.

Selon une caractéristique de l'invention, chaque couche superposée est inclinée par rapport à un plan perpendiculaire à une direction selon laquelle est mesurée l'épaisseur du matelas isolant d'un angle d'orientation inférieur à 10°.

Selon une caractéristique de l'invention, chaque couche superposée est inclinée par rapport à un plan perpendiculaire à une direction selon laquelle est mesurée l'épaisseur du matelas isolant d'un angle d'orientation compris entre 4° et 8°.

Le plan servant de référence pour définir l'inclinaison de chaque couche est parallèle à la surface du convoyeur sur lequel repose le matelas isolant au cours de sa fabrication. On comprend que l'angle d'orientation précédemment évoqué peut être mesuré en cours de procédé de fabrication, entre le convoyeur sur lequel circule la superposition de couches et le plan d'extension dans lequel s'inscrit la couche considérée.

L'invention porte également sur un procédé de fabrication d'un matelas isolant, le matelas isolant étant obtenu par la superposition d'au moins 30 couches, le procédé mettant en œuvre :
- au moins une première étape au cours de laquelle au moins un mélange de fibres et d'éléments liants est déposé sur un premier convoyeur par un dispositif de formage à air de sorte à former un voile primaire,
- au moins une deuxième étape au cours de laquelle le voile primaire est déposé en couches successives superposées par un dispositif de nappage sur un deuxième convoyeur de sorte à former une superposition de couches,
- au moins une troisième étape au cours de laquelle la superposition de couches est chauffée dans une étuve de sorte à former le matelas isolant.

Un tel procédé de fabrication permet d'automatiser la fabrication de matelas isolant en combinant la réalisation de couches, dont l'épaisseur est comprise entre 0,05 mm et 2 mm, issues d'un voile primaire obtenu par le dispositif de formage à air et la superposition de ces dernières les unes sur les autres. On comprend que chaque couche d'un matelas isolant est formée d'un même voile primaire, les couches étant superposées les unes sur les autres pour former une nappe primaire qui, une fois chauffée dans une étuve, forme le matelas isolant.

Selon une caractéristique de l'invention, la première étape est précédée d'une étape de sélection du grammage du voile primaire, ledit grammage du voile primaire multiplié par le nombre de couches à superposer, au moins égal à 30, devant être égal au grammage à respecter du matelas isolant et l'épaisseur correspondante du voile primaire multipliée par ce nombre de couches devant être au moins égale à l'épaisseur à respecter du matelas isolant.

On comprend que le grammage du voile primaire ainsi sélectionné correspond au grammage moyen d'une couche de la superposition de couches.

Selon une caractéristique de l'invention, des paramètres de fonctionnement du dispositif de formage à air sont définis, suite à l'étape de sélection du grammage du voile primaire, pour obtenir lors de la première étape le grammage sélectionné du voile primaire. À titre d'exemple, un desdits paramètres de fonctionnement est la vitesse de défilement du premier convoyeur.

Selon une caractéristique de l'invention, au cours de la première étape, le voile primaire est déposé sur un voile support présent sur le premier convoyeur. Ce voile support permet, par exemple, de transporter le voile primaire du dispositif de formage à air jusqu'au dispositif de nappage lorsque le premier convoyeur et le deuxième convoyeur sont discontinus. En effet, du fait de la faible épaisseur du voile primaire, l'enlèvement du voile primaire du premier convoyeur par une prise directe sur le voile primaire pourrait détériorer le voile primaire.

On comprend que lorsque le deuxième convoyeur est dans la continuité du premier convoyeur, c'est-à-dire que le voile primaire passe du premier convoyeur au deuxième convoyeur uniquement au moyen des mouvements générés par ces deux convoyeurs, le voile support n'est pas nécessaire.

Selon une caractéristique de l'invention, le procédé de fabrication met en œuvre une étape antérieure à la deuxième étape au cours de laquelle le voile primaire est chauffé par un dispositif de chauffage. Ce chauffage du voile primaire permet aux éléments thermoliants présents dans le voile primaire de lier les fibres les unes aux autres. Ainsi, le voile primaire présente une tenue mécanique améliorée et peut être manipulé ou stocké sans risque que ce dernier se désagrège.

Selon une caractéristique de l'invention, le procédé de fabrication peut mettre en œuvre une étape d'ajustement de l'épaisseur de la superposition de couches, préalablement, pendant ou postérieurement à la troisième étape, pour fournir un matelas isolant à une épaisseur donnée. Cet ajustement de l'épaisseur met en œuvre des moyens de pressage, par exemple par des rouleaux disposés sur le trajet de la superposition de couches, qui tendent à diminuer l'épaisseur de la superposition de couches pour amener le matelas isolant à l'épaisseur à respecter.

D'autres caractéristiques, détails et avantages de l'invention ressortiront plus clairement à la lecture de la description qui suit d'une part, et d'exemples de réalisation donnés à titre indicatif et non limitatif en référence aux dessins schématiques annexés d'autre part, sur lesquels :
[Fig.1] représente une vue de coupe d'un matelas isolant selon un mode de réalisation de l'invention ;
[Fig.2] représente une vue de coupe en détails de différentes couches de fibres formant un matelas isolant selon un autre mode de réalisation de l'invention ;
[Fig.3] représente une vue en détail d'une couche au sein de laquelle les fibres sont liées les unes aux autres au moyen d'un élément liant selon un mode de réalisation de l'invention ;
[Fig.4] est un diagramme représentatif des épaisseurs et grammages à respecter des matelas isolants, ledit diagramme permettant d'illustrer une étape de choix du grammage approprié d'une couche du matelas isolant et/ou le nombre de couches présentes dans le matelas isolant ;
[Fig.5] représente schématiquement un dispositif de formage à air apte à réaliser un voile primaire formant les différentes couches du matelas isolant ;
[Fig.6] représente schématiquement un dispositif de nappage apte à superposer en couches successives le voile primaire pour former une superposition de couches.

Il faut tout d'abord noter que si les figures exposent l'invention de manière détaillée pour sa mise en œuvre, ces figures peuvent bien entendu servir à mieux définir l'invention, le cas échéant. Il est également à noter que ces figures n'exposent que des exemples de réalisation de l'invention.

Les caractéristiques, les variantes et les différentes formes de réalisation de l'invention peuvent être associées les unes aux autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique ou pour différencier l'invention par rapport à l'état de la technique.

Sur les figures, les éléments communs à plusieurs figures conservent la même référence.

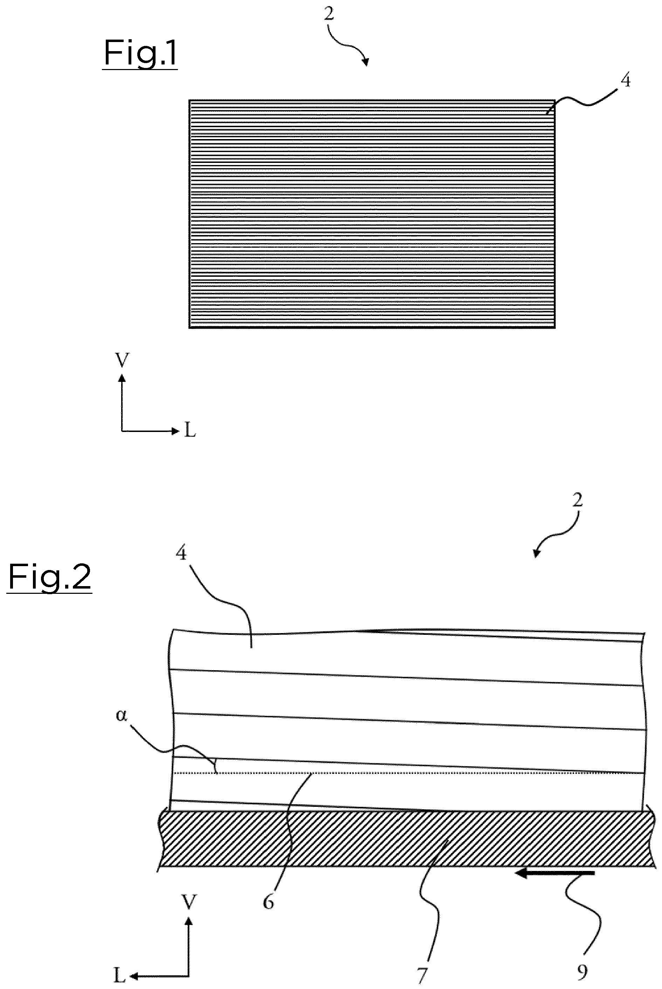

Dans la description qui va suivre, on se référera à une orientation fonction des axes Longitudinaux, Verticaux et Transversaux tels qu'ils sont définis arbitrairement par le trièdre L, V, T représenté sur les figures 1 à 3 et 5 et 6. Le choix des appellations de ces axes n'est pas limitatif de l'orientation que peut prendre le matelas isolant une fois celui-ci obtenu par le procédé de l'invention.

Il convient de noter que dans la présente invention et dans la description qui est faite, on distingue le matelas isolant faisant l'objet de l'invention et une superposition de couches qui permet d'obtenir ce matelas isolant dans la mesure où le matelas isolant est obtenu par le passage en étuve de ladite superposition de couches. Préalablement au passage en étuve, on constitue ladite superposition de couches en déposant les unes sur les autres des couches de fibres formées par un voile primaire et c'est la cuisson dans l'étuve de cet ensemble, et le cas échéant une étape ultérieure de compression avant conditionnement, qui forme le matelas isolant.

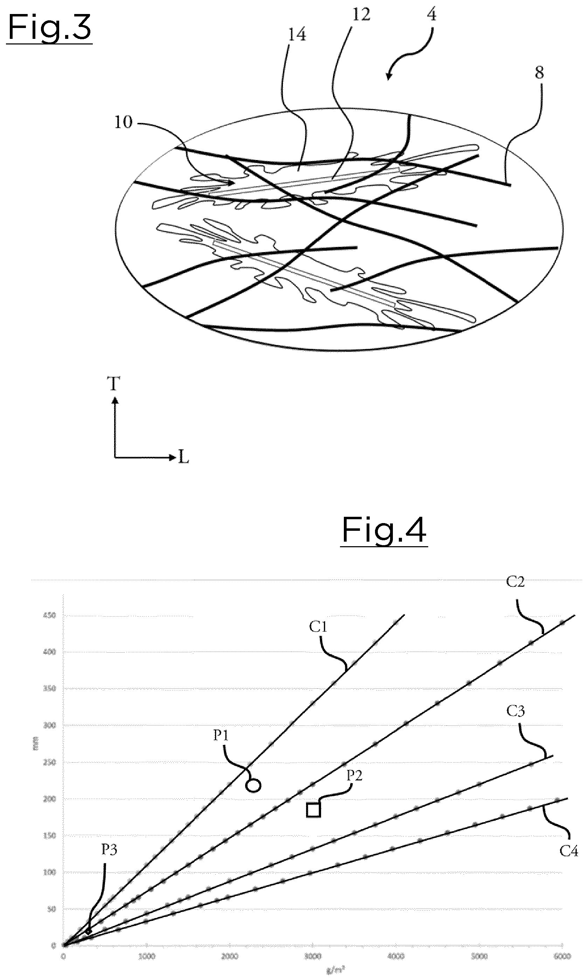

La figure 1 illustre schématiquement une vue de coupe d'un matelas isolant 2 selon un mode de réalisation de l'invention. Ce matelas isolant 2 est formé, conformément à la présente invention, d'une superposition de couches 4 elles-mêmes formées d'une pluralité de fibres liées les unes aux autres au moyen d'un élément liant. Les fibres, qui seront décrites plus en détail en lien avec la figure 3, sont dans le mode de réalisation représenté des fibres de verre obtenues par la transformation, par exemple, de matières premières ou par le recyclage de fibres de verre, par exemple d'un matelas de laine de verre. Il convient de noter que sans sortir du cadre de la présente invention, les fibres utilisées pour former les couches formant le matelas isolant 2 peuvent être des fibres végétales, par exemple obtenues par le défibrage de bois de Douglas.

Le matelas isolant 2 représenté par la figure 1 s'étend selon une direction d'allongement principale longitudinale, parallèlement à l'axe L. Ce matelas isolant 2 présente en sortie d'étuve une forme rectangulaire dont la longueur, qui forme la dimension la plus grande du matelas isolant 2, est mesurée parallèlement à ladite direction d'allongement principal longitudinal. La largeur du matelas isolant 2, qui forme la deuxième dimension du matelas isolant 2 en termes de taille, est mesurée selon une direction transversale perpendiculaire à la direction d'allongement principal longitudinale. L'épaisseur du matelas isolant 2 est la plus petite dimension dudit matelas isolant 2 comparativement à la longueur et à la largeur. Cette épaisseur est perpendiculaire à la longueur et à la largeur du matelas isolant 2, c'est-à-dire perpendiculaire à la direction d'allongement principal longitudinal et à la direction transversale. De plus l'épaisseur est mesurée selon une direction verticale, parallèlement à l'axe V.

Les couches 4 sont superposées les unes sur les autres selon une direction d'empilement. Cette superposition de couches 4 est, selon l'invention, d'au moins 30 couches, préférentiellement d'au moins 50 couches, encore plus préférentiellement d'au moins 70 couches. La direction d'empilement est perpendiculaire au plan d'allongement des différentes couches 4. Dans le mode de réalisation représenté par la figure 1, cette direction d'empilement est parallèle à la direction verticale correspondant à la direction le long de laquelle est mesurée l'épaisseur du matelas isolant 2.

L'épaisseur des couches 4 est comprise entre 0,05 mm et 2 mm, préférentiellement entre 0,1 mm et 1 mm, et cette épaisseur est notamment due au faible grammage du voile primaire participant à former chacune des couches, tel que cela va être présenté ci-après. Notamment, le grammage moyen d'une couche est compris entre 8 g.m⁻² et 35 g.m⁻², et il peut notamment être égal à 10 g.m⁻² (points G1 sur la figure 4), 15 g.m⁻² (points G2 sur la figure 4), 25 g.m⁻² (points G3 sur la figure 4) ou encore 30 g.m⁻² (points G4 sur la figure 4). On comprend que plus le grammage de la couche est faible, c'est-à-dire que moins de fibres et d'élément liant sont présents pour une surface donnée de la couche, moins le risque de chevauchement et superposition des fibres est élevé, ce qui permet de limiter l'épaisseur de la couche. Pour les valeurs de grammage évoquées à titre d'exemple, l'épaisseur d'une couche est de l'ordre de 1 mm.

Plus précisément, les couches 4 sont issues d'un matelas de fibres formant un voile primaire dont l'épaisseur est comprise entre 0,05 mm et 2 mm, préférentiellement entre 0,1 mm et 1 mm et ce voile primaire à faible grammage peut notamment être obtenu par un dispositif de formage à air qui sera décrit plus en détail en lien avec la figure 4.

Les spécificités de chaque couche, c'est-à-dire du voile primaire, sont définies de manière à maximiser le nombre de couches 4 pouvant être superposées les unes sur les autres, tout en respectant l'épaisseur et le grammage souhaités du matelas isolant.

Il est à noter que l'épaisseur des couches 4 est mesurée le long de la direction d'empilement desdites couches 4. Dans le mode de réalisation représenté par la figure 1, l'épaisseur de chaque couche 4 est mesuré parallèlement à l'épaisseur du matelas isolant 2.

En outre, dans le mode de réalisation représenté par la figure 1, chacune des couches 4 s'étend dans un plan perpendiculaire à la direction d'empilement des couches 4 au sein du matelas isolant.

Dans le premier mode de réalisation, qui résulte en la superposition de couches illustrée sur la figure 1, le voile primaire est découpé aux dimensions voulues pour obtenir les couches 4, cette découpe du voile primaire étant avantageusement réalisée de façon répétitive pour que chaque couche 4 présente des dimensions similaires aux autres couches 4. Il est à noter que la découpe du voile primaire dont il est fait mention en lien avec ce mode de réalisation est réalisée perpendiculairement à la direction d'avancement du convoyeur de telle sorte que chaque couche 4 découpée présente des dimensions similaires selon la direction longitudinale. On comprend qu'une telle découpe permet de limiter les rebus longitudinaux du matelas isolant 2.

Dans ce premier mode de réalisation, le voile primaire découpé en couches 4 est transporté jusqu'à une zone d'assemblage. Ce transport des couches 4 est, ici, réalisé manuellement. À cet effet, le voile primaire est transporté sur un voile support, rigide, permettant de ne pas détériorer le voile primaire lors de son transport. Le voile primaire ainsi transporté et découpé aux dimensions voulues est déposé en couches successives, le voile support ayant servi au transport étant retiré préalablement au dépôt, et la superposition de couches est dirigée vers une étuve pour former un matelas isolant conforme à l'invention.

On comprend que les couches 4 sont, dans ce mode de réalisation représenté, distinctes les unes des autres. Une telle distinction des couches 4 superposées permet de les déposer les unes sur les autres avec une direction d'empilement qui est perpendiculaire au plan d'allongement de chacune des couches formant le matelas isolant 2. Une telle disposition des couches 4 permet d'immobiliser de l'air en strates parallèles au plan d'allongement principal du matelas isolant, ce qui est optimal pour améliorer les propriétés isolantes du produit obtenu.

La figure 2 représente schématiquement une vue de coupe locale du matelas isolant 2 selon un autre mode de réalisation. Il est à noter que le plan de coupe rendant visible l'intérieur du matelas isolant 2 visible sur la figure 2, est parallèle au plan de coupe rendant visible l'intérieur du matelas isolant 2 visible sur la figure 1. Il est également à noter que sur la figure 2 le grossissement est supérieur à celui de la figure 1 pour permettre de mettre en évidence l'inclinaison des couches 4 au sein du matelas isolant 2 dans ce mode de réalisation. À l'instar du matelas isolant 2 représenté par la figure 1, le matelas isolant 2 représenté par la figure 2 comprend, selon l'invention, au moins 30 couches 4.

Dans cet autre mode de réalisation représenté sur la figure 2, le voile primaire n'est pas découpé et il est déposé en plusieurs couches successives, chaque couche 4 étant formée d'un seul tenant avec les autres couches 4.

Les couches 4 présentent une inclinaison par rapport à un plan d'allongement principal du matelas isolant 2. Ce plan d'allongement principal 6 s'étend longitudinalement et transversalement, c'est-à-dire selon les deux dimensions du matelas isolant 2 les plus grandes. Pour rappel, ces deux dimensions sont la longueur et la largeur du matelas isolant 2 en sortie d'étuve. En effet, tel que visible sur la figure 2, la direction d'empilement des couches 4 est sécante par rapport à la direction le long de laquelle est mesurée l'épaisseur du matelas isolant 2.

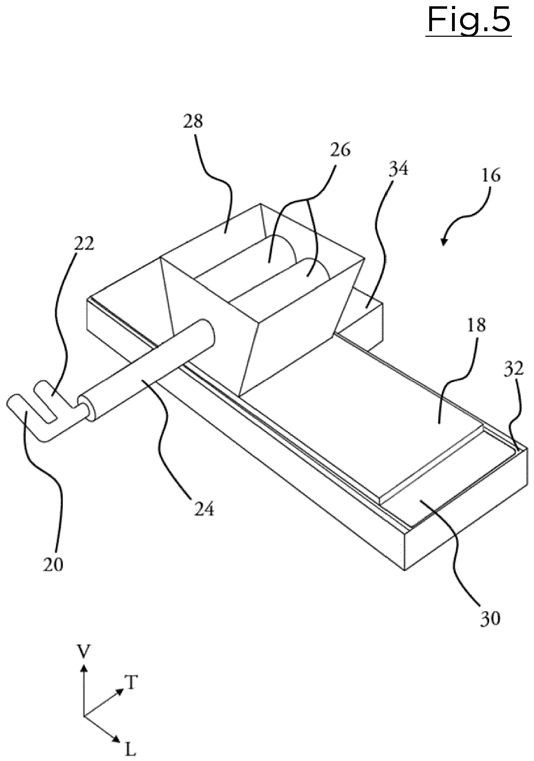

Cette inclinaison résulte de la superposition des couches 4 par un dispositif de nappage qui sera décrit plus en détail en lien avec la figure 5. Ce dispositif de nappage permet de déposer le voile primaire en couches 4 successives de manière continue. On comprend que chaque couche 4 formant le matelas isolant 2 est, dans ce mode de réalisation représenté, formée dans la continuité des couches 4 adjacentes.

Plus spécifiquement, le voile primaire est déposé sur un support roulant 7 circulant à vitesse constante. Le dépôt du voile primaire est réalisé en superposant une première extrémité de la couche en cours de dépôt sur les couches préalablement déposées et une deuxième extrémité de cette couche en cours de dépôt, opposée à la première extrémité, directement au contact du support roulant 7.

On comprend qu'un tel dépôt des couches est permis par le fait que le tapis roulant 7 se déplace dans un sens d'avancement 9 en entraînant avec lui les couches 4 qui ont été préalablement déposées. En outre, la vitesse de déplacement constante du support roulant 7 permet d'effectuer le dépôt d'une nouvelle couche de façon régulière.

Un tel dépôt génère un décalage entre la première extrémité et la deuxième extrémité par rapport à une direction perpendiculaire à un plan dans lequel s'étend le support roulant 7, ce qui génère une inclinaison de la couche en cours de dépôt par rapport audit plan du support roulant 7.

Tel que visible sur la figure 2, l'inclinaison des couches 4 génère un angle d'orientation α défini entre une couche 4 et un plan parallèle au plan du tapis roulant, perpendiculaire à la direction selon laquelle est mesurée l'épaisseur du matelas isolant 2. Cette direction selon laquelle est mesurée l'épaisseur du matelas isolant est perpendiculaire au plan du tapis roulant 7. Cet angle d'orientation α est inférieur à 10°, préférentiellement compris entre 4° et 8°.

La faible épaisseur des couches 4, conformément à l'invention, permet de limiter le décalage entre la première extrémité et la deuxième extrémité de chaque couche 4 par rapport à ladite direction perpendiculaire au plan du tapis roulant 7 et donc de limiter la valeur de l'angle d'orientation α des couches 4. On comprend que plus le décalage entre les première et deuxième extrémités par rapport à la direction selon laquelle est mesurée l'épaisseur du matelas isolant 2 est faible et plus l'angle d'orientation α est faible. Ainsi, une superposition de couches telles qu'évoquées précédemment, c'est-à-dire dont le grammage est compris entre 8 g.m⁻² et 30 g.m⁻² et/ou dont l'épaisseur est comprise entre 0,05mm et 2mm, permet de s'assurer que l'angle d'orientation α est le plus faible possible. Il a pu être constaté par les inventeurs que le fait d'avoir un angle d'orientation α des couches le plus faible possible permettait d'augmenter la résistance thermique du matelas isolant 2 en limitant la formation de ponts thermiques dans l'épaisseur du matelas isolant 2.

Par ailleurs, à l'instar du mode de réalisation représenté par la figure 1, les couches 4 sont, dans le mode de réalisation représenté par la figure 2, déposées les unes sur les autres de telle sorte que chaque couche 4 du matelas isolant 2 est sensiblement parallèle aux autres couches 4. On comprend de ce qui précède que chaque couche 4 s'étend, dans de mode de réalisation, avec un même angle d'orientation α par rapport au plan du tapis roulant 7.

La figure 3 représente schématiquement une vue en détail d'une couche 4 formant le matelas isolant 2. Cette vue en détail permet notamment de visualiser des fibres 8 formant, tel qu'évoqué précédemment, chacune des couches 4 du matelas isolant 2. Il est à noter que cette vue en détail d'une couche 4 est obtenue après le passage de la superposition de couches 4 dans une étuve pour obtenir le matelas isolant.

Plus spécifiquement, cette vue en détail d'une couche 4 illustre les fibres 8 solidarisées les unes avec les autres par voie sèche, c'est-à-dire avec des éléments liants secs. L'utilisation d'éléments liants 10 secs comme moyen de solidarisation des fibres 8 entre elles participe à assurer l'homogénéité des fibres 8 au sein de la couche 4 comparativement à un élément liant liquide. En effet, cette voie sèche ne forme pas d'agglomérats de fibres 8, tel que cela peut être le cas lorsque plusieurs fibres sont piégées dans un liant liquide, ce qui permet d'obtenir des couches 4 dont l'épaisseur est comprise entre 0,05 mm et 2mm.

Dans le mode de réalisation représenté par la figure 3, les éléments liants 10 sont des éléments thermoliants. Ces éléments liants 10 sont mélangés avec les fibres 8 de telle sorte que le mélange d'élément liants 10 et de fibres 8 comprend une teneur d'éléments liants 10 comprise entre 2% et 30%, préférentiellement entre 3% et 15%, plus préférentiellement entre 4% et 10%. On comprend que le voile primaire, obtenu par ce mélange, et chaque couche 4 issue du voile primaire comprennent également une teneur en éléments liants 10 comprise entre 2% et 30%, préférentiellement entre 3% et 15%, plus préférentiellement entre 4% et 10%. Ce pourcentage d'éléments liants 10 dans le mélange ainsi que dans chaque couche 4 représente le pourcentage massique d'éléments liants 10 par rapport à la masse du mélange ou par rapport à la masse de chaque couche 4. À titre d'exemple illustratif et non limitatif de l'invention, une couche 4 dont la masse est de 20 grammes présente une masse d'éléments liants 10 comprise entre 0,4 gramme et 6 grammes.

Les éléments liants 10, sont formés, dans le mode de réalisation représenté, d'un cœur 12 et d'une gaine 14. Le cœur 12 forme une partie rigide des éléments liants 10 offrant à la couche 4 une résistance mécanique, tandis que la gaine 14 assure la solidarisation des fibres 8 les unes avec les autres. À cet effet, le cœur 12 et la gaine 14 présentent des températures de fusion différentes, et plus précisément la gaine 14 présente une température de fusion plus basse que le cœur 12.

Ainsi, lors du passage de la superposition de couches 4 dans une étuve pour obtenir un matelas isolant 2 conforme à l'invention, la gaine 14 est portée à une température qui génère sa fusion, ce qui a pour effet de baigner ensemble les fibres 8 adjacentes et le cœur de chacun des éléments thermoliants, la matière de la gaine étant ensuite destinée à se resolidifier en refroidissant en sortie de l'étuve de sorte à solidariser ces fibres 8 les unes avec les autres. Il est à noter que la température de fusion du cœur 12 est prévue pour que, malgré le passage dans l'étuve de la superposition de couches constituée du mélange de fibres 8 et d'éléments liants 10, le cœur 12 conserve sa propriété rigide participant à assurer une résistance mécanique au matelas isolant 2 après son passage en étuve.

Tel qu'évoqué précédemment, un matelas isolant selon l'invention est particulier en ce qu'il comporte un nombre minimal de couches superposées qui est élevé par rapport à celui de l'art antérieur. Le grammage moyen et l'épaisseur moyenne d'une couche de cette superposition de couches est choisi de sorte que le nombre de couches soit au moins supérieur à 30. Étant compris que l'obtention d'une couche à faible grammage est difficile à mettre en œuvre et implique des couches à faible tenue mécanique, il peut être souhaitable de choisir un grammage moyen des couches le plus haut possible, dès lors que le nombre de couches minimum de 30 est respecté et que l'épaisseur du matelas isolant qui résulte de la superposition de couches est au moins respectée. Des exemples de sélection du grammage du voile primaire, c'est-à-dire du grammage moyen d'une couche de la superposition de couches, sont donnés en référence à la figure 4.

La figure 4 est un diagramme dans lequel sont identifiés trois produits finis différents, P1, P2, P3, le diagramme permettant d'identifier le grammage et l'épaisseur à respecter de ces matelas isolants. Notamment, le premier matelas isolant P1 doit avoir en fin de procédé de fabrication une épaisseur de 220mm et un grammage de 2300g.m⁻², le deuxième matelas isolant P2 doit avoir en fin de procédé de fabrication une épaisseur de 180mm et un grammage de 3000g.m⁻² et le troisième matelas isolant P3 doit avoir en fin de procédé de fabrication une épaisseur de 20mm et un grammage de 300g.m⁻².

Le but est d'arriver exactement au grammage et d'arriver au moins à l'épaisseur, avec un nombre de couches au moins supérieur à la valeur seuil déterminée par les inventeurs et avec les couches qui présentent le plus haut grammage possible pour la tenue mécanique. La valeur seuil est définie pour avoir la meilleure isolation possible, en multipliant les strates d'air entre des couches sensiblement planes. Ici, la valeur seuil est égale à 30 couches.

Dans l'étape de sélection ici représentée, l'utilisateur a la possibilité d'avoir un premier voile primaire de 10 g.m⁻² (ligne C1 sur la figure 4), un deuxième voile primaire de 15 g.m⁻² (ligne C2 sur la figure 4), un troisième voile primaire de 25 g.m⁻² (ligne C3 sur la figure 4) ou encore un quatrième voile primaire de 30 g.m⁻² (ligne C4 sur la figure 4). A ces valeurs de grammage, l'utilisateur peut considérer qu'une couche obtenue par l'un ou l'autre de ces voiles primaires présente une épaisseur de 1mm.

Pour obtenir le premier matelas isolant P1, l'utilisateur considère le grammage de 2300g.m⁻² et en déduit qu'il atteindra ce grammage total avec 230 couches du premier voile primaire, ce qui génère une superposition de couches de 230mm, ou avec environ 153 couches du deuxième voile primaire, ce qui génère une superposition de couches de 153mm, ou avec 92 couches du troisième voile primaire, ce qui génère une superposition de couches de 92mm, ou encore avec environ 77 couches du quatrième voile primaire ce qui génère une superposition de couches de 77mm.

Dès lors, l'utilisateur choisit le premier voile primaire, car seule une superposition de couches issues du premier voile primaire permet d'atteindre une épaisseur au moins égale à l'épaisseur à respecter du premier matelas isolant P1.

De même, pour obtenir le troisième matelas isolant P3, l'utilisateur considère le grammage de 300g.m⁻² et en déduit qu'il atteindra ce grammage total avec 30 couches du premier voile primaire, ce qui génère une superposition de couches de 30mm, ou avec 20 couches du deuxième voile primaire, ce qui génère une superposition de couches de 20mm, ou avec 12 couches du troisième voile primaire, ce qui génère une superposition de couches de 12mm, ou encore avec 10 couches du quatrième voile primaire ce qui génère une superposition de couches de 10mm.

Dès lors, l'utilisateur choisit le premier voile primaire, car seule une superposition de couches issues du premier voile primaire permet d'atteindre le nombre minimum de 30 couches permettant d'optimiser les performances d'isolation.

Concernant le deuxième matelas isolant P2, l'utilisateur considère le grammage de 3000g.m⁻² et en déduit qu'il atteindra ce grammage total avec 300 couches du premier voile primaire, ce qui génère une superposition de couches de 300mm, ou avec 200 couches du deuxième voile primaire, ce qui génère une superposition de couches de 200mm, ou avec 120 couches du troisième voile primaire, ce qui génère une superposition de couches de 120mm, ou encore avec 100 couches du quatrième voile primaire ce qui génère une superposition de couches de 100mm.

Dès lors, l'utilisateur peut tout aussi bien choisir le premier voile primaire que le deuxième voile primaire puisqu'une superposition de couches issues du premier voile primaire ou du deuxième voile primaire permet d'atteindre l'épaisseur à respecter de 180mm du matelas isolant.

Dans ce contexte, le procédé de sélection du grammage du voile primaire implique de choisir le deuxième voile primaire plutôt que le premier voile primaire, pour choisir le voile primaire de plus haut grammage pour privilégier le voile primaire de plus grande tenue mécanique.

Il peut ainsi être considéré que l'invention comporte le cas échéant une étape de sélection du grammage du voile primaire, dans un procédé global d'obtention d'un matelas isolant, au cours duquel le grammage du voile primaire multiplié par le nombre de couches à superposer, au moins égal à 30, doit être égal au grammage à respecter du matelas isolant et l'épaisseur correspondante du voile primaire multipliée par ce nombre de couches devant être au moins égale à l'épaisseur à respecter du matelas isolant.

La figure 5 représente un dispositif de formage à air 16 permettant de produire un voile primaire 18 utilisé pour former par la suite les différentes couches 4 du matelas isolant 2, notamment dans le contexte d'une couche à faible grammage choisi le cas échéant au cours d'une étape de sélection du grammage tel qu'évoqué précédemment.

Le dispositif de formage à air 16 est apte à mettre en œuvre un procédé de formation d'un voile primaire 18 plus connu sous la dénomination anglaise de procédé « Airlaid ».

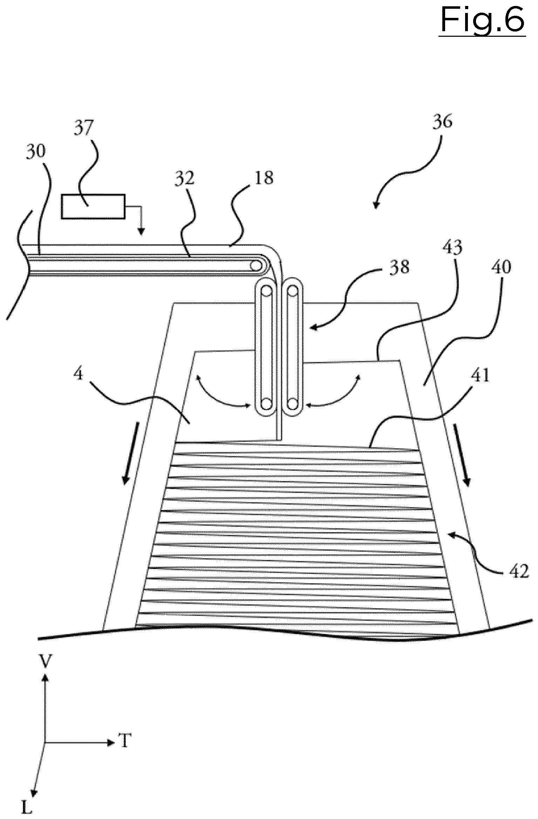

Tel qu'évoqué précédemment, en sortie du dispositif de formage à air, le voile primaire 18 peut être découpé aux dimensions voulues pour que chaque découpe forme une couche 4 distincte des autres et apte à être superposée à d'autres couches, ou bien il peut être conservé d'un seul tenant et agencé en couches 4 successives par un dispositif de nappage, qui sera décrit plus en détail en lien avec la figure 6.

Le mélange des éléments liants 10 et des fibres 8 dans des teneurs conformes à ce qui a été décrit précédemment est, dans le mode de réalisation représenté, réalisé par le dispositif de formage à air 16. À cet effet, le dispositif de formage à air 16 comprend un premier canal d'alimentation 20 par lequel les éléments liants 10 sont introduits dans le dispositif de formage à air 16, et un deuxième canal d'alimentation 22 par lequel les fibres 8 sont introduites dans le dispositif de formage à air 16. Les éléments liants 10 sont introduits de façon désordonnée dans le premier canal d'alimentation 20 et les fibres sont introduites de façon désordonnée dans le deuxième canal d'alimentation 22. De manière alternative, les fibres 8 peuvent provenir d'un ensemble de fibres recyclées, conditionné sous la forme d'un rouleau ou d'une balle, et défibré au préalable dans une installation de défibrage, de sorte que les fibres introduites dans le dispositif de formage à air 16 soient séparées les unes des autres.

Les fibres 8 et les éléments liants 10 sont mélangés entre eux dans un conduit 24 de sorte que, conformément à l'invention, la teneur en élément liant 10 dans le voile primaire 18 et plus largement dans le matelas isolant 2 soit comprise entre 2% et 30%, préférentiellement entre 3% et 15%, plus préférentiellement entre 4% et 10%.

Plus spécifiquement, l'introduction des éléments liants 10 et des fibres 8 est contrôlée par le dispositif de formage à air 16. On comprend que la quantité de fibres 8 introduites dans le conduit 24 et la quantité d'éléments liants 10 introduits dans le conduit 24 sont contrôlées par le dispositif de formage à air 16 de sorte que le mélange de fibres 8 et d'éléments liants 10 dans le conduit 24 présente une teneur en éléments liants 10, selon l'invention, comprise entre 2% et 30%, préférentiellement comprise entre 3% et 15%, plus préférentiellement entre 4% et 10%.

En d'autres termes, le dispositif de formage à air 16 est configuré pour que sur un intervalle de temps donné, 2% à 30% de la masse introduite dans le conduit 24 soit formée d'éléments liants 10, la masse introduite restante étant formée des fibres 8. On comprend que le pourcentage exprimé est un pourcentage massique qui illustre le rapport entre le poids constaté des éléments liants et le poids total de l'ensemble formé par les éléments liants et les fibres.

L'introduction des fibres 8 et des éléments liants 10 dans le dispositif de formage à air 16 est réalisée au moyen d'un flux d'air aspirant les fibres 8 et les éléments liants 10. Ce flux d'air permet également d'assurer le mélange des fibres 8 avec les éléments liants 10 dans le conduit 24.

Le conduit 24 est connecté à deux tambours 26 logés dans un bac de formage 28. Le mélange de fibres 8 et d'éléments liants 10 est introduit en quantité sensiblement identique dans chacun des tambours 26. Ces tambours 26 sont des cylindres creux s'étendant selon une direction d'allongement principal transversale, parallèlement à l'axe T. Il convient de noter que cette direction transversale correspond à la dimension transversale du voile primaire 18 formant les couches 4.

Chaque tambour 26 est respectivement apte à être entraîné en rotation le long d'un axe de rotation qui, dans le mode de réalisation représenté, est l'axe de révolution propre à chaque tambour 26. Il est à noter que dans le mode de réalisation représenté, le dispositif de formage à air 16 comprend deux tambours 26, chacun entraîné en rotation autour de son axe de révolution dans une direction opposée. Sans sortir du contexte de l'invention, le dispositif de formage à air 16 peut comprendre un nombre plus important de tambours 26.

Les tambours 26 sont percés d'une pluralité d'orifices, non visible sur la figure 5, qui s'étendent selon la direction d'allongement principal transversale des tambours 26. Les fibres 8 et les éléments liants 10 sont brassés dans les tambours 26 et passent à travers les orifices. Les fibres 8 et les éléments liants 10 sont alors déposés sur un premier convoyeur 32 pour former le voile primaire 18. Plus spécifiquement, dans le mode de réalisation représenté, les fibres 8 et les éléments liants sont déposés sur un voile support 30 présent sur le premier convoyeur 32 et se déplaçant avec celui-ci. Tel qu'évoqué précédemment, ce voile support 30 peut permettre, le cas échéant, de transporter le voile primaire 18, par exemple jusqu'à une zone d'assemblage où le voile primaire est superposé en couches 4 successives.

Cette fine épaisseur du voile primaire 18 est permise par une disposition des fibres 8 et des éléments liants 10 dans un même plan d'extension. Plus précisément, le mélange de fibres 8 et d'éléments liants 10 est, tel que décrit précédemment, déposé par les tambours 26 sur le premier convoyeur 32. Ces tambours 26 sont entraînés en rotation à une vitesse contrôlée pour déposer à un instant donné une quantité dudit mélange voulue. Le mélange est alors plaqué par aspiration sur le premier convoyeur 32.

À cet effet, le dispositif de formage à air 16 est configuré pour faire circuler un flux d'air entre une entrée d'air et une sortie d'air 34 réparties de part et d'autre du premier convoyeur 32. Plus spécifiquement, l'entrée d'air et la sortie d'air 34 sont réparties par rapport au premier convoyeur 32 de telle sorte que le flux d'air circulant entre l'entrée d'air et la sortie d'air 34 circule entre les tambours 26 et traverse le mélange déposé sur le premier convoyeur 32 de sorte à venir plaquer le mélange contre le premier convoyeur 32, ou le cas échéant contre le voile support.

Dans le mode de réalisation représenté par la figure 5, le flux d'air entre dans le dispositif de formage à air 16 par le conduit 24 et sort par la sortie d'air 34. La sortie d'air 24 comprend un moyen d'aspiration de l'air forçant la circulation du flux d'air entre l'entrée d'air et la sortie d'air 34. Alternativement, le flux d'air peut entrer dans le dispositif de formage à air 16 par la partie supérieure du bac de formage 28.

Il est à noter que le premier convoyeur 32 se déplace à une vitesse qui est également contrôlée. On comprend que l'ensemble de ces éléments permet, en modifiant leurs paramètres de fonctionnement, de modifier, individuellement ou conjointement, l'épaisseur du voile primaire 18 formé sur le premier convoyeur 32 de telle sorte que le voile primaire 18 présente une épaisseur comprise entre 0,05 mm et 2 mm, préférentiellement entre 0,1 mm et 1 mm.

Les fibres 8 présentent une longueur maximale de 20 mm. De plus, à titre d'exemple, ces fibres 8 présentent un diamètre moyen compris entre 9µm et 12µm. De telles caractéristiques dimensionnelles des fibres minérales permettent d'obtenir, au moyen du dispositif de formage à air 16, un voile primaire 18 avec une épaisseur comprise entre 0,05 mm et 2 mm, préférentiellement entre 0,1 mm et 1 mm. On comprend que sur la figure 5, l'épaisseur du voile primaire 18 représenté a été exagérée par rapport au dispositif de formage à air de sorte à visualiser convenablement le voile primaire 18.

Il convient de noter que cette faible épaisseur du voile primaire 18 permet de superposer, pour une épaisseur finale du matelas isolant 2 donnée, un nombre de couches 4 plus important qu'avec un voile primaire plus épais. La quantité d'air immobilisée de façon stable au sein du matelas isolant 2 augmente avec l'augmentation du nombre de couches. On comprend ainsi que la faible épaisseur des couches 4, formées respectivement par une portion du voile primaire 18, permet de maximiser les propriétés isolantes du matelas isolant 2 obtenu par la superposition desdites couches 4.

Le dépôt du mélange de fibres 8 et d'éléments liants 10 sur le premier convoyeur 32 permet d'obtenir un voile primaire 18 dont le grammage est compris entre 8 g.m⁻² et 30 g.m⁻². On comprend que le grammage de chaque couche 4 du matelas isolant préalablement au passage des couches 4 en étuve correspond au grammage du voile primaire 18.

Tel qu'évoqué précédemment, le voile primaire 18 formé au moyen du dispositif de formage à air 16 est utilisé pour générer un matelas isolant 2 comprenant plusieurs couches 4 superposées les unes sur les autres, chaque couche 4 présentant l'épaisseur et le grammage du voile primaire 18. Cette superposition de couches peut se faire par des dépôts successifs de morceaux découpés du voile primaire 18 au niveau d'une zone d'assemblage distante du dispositif de formage à air 16. Dans cette configuration, les morceaux découpés du voile primaire 18 peuvent être transportés d'un site de production du voile primaire 18 à un site d'assemblage sans que chacun de ces sites ne soient reliés par exemple au moyen d'un convoyeur, en transportant le voile primaire avec le voile support précédemment évoqué.

Cette superposition de couches peut également être réalisée par un dispositif de nappage 36 visible sur la figure 6 et placé dans la continuité du dispositif de formage à air 16 dans la chaîne de production du matelas isolant 2.

Dans le mode de réalisation représenté par cette figure 6, le dispositif de nappage 36 est directement alimenté en voile primaire 18 par le premier convoyeur 32. On comprend que le dispositif de nappage 36 est disposé dans la continuité du dispositif de formage à air 16.

Il convient de noter qu'au regard du grammage fin et de l'épaisseur fine du voile primaire 18, les éléments liants 10, ici sous la forme d'éléments thermoliants, confèrent une tenue mécanique suffisante pour permettre au voile primaire 18 de ne pas se désagréger.

À cet effet, pour assurer cette tenue mécanique du voile primaire 18, un dispositif de chauffage 37 est ménagé en regard du premier convoyeur 32 de telle sorte que ce dispositif de chauffage 37 est apte à chauffer le voile primaire 18 circulant sur le premier convoyeur 32. Ce dispositif de chauffage 37 comporte, dans le mode de réalisation représenté, une résistance électrique générant de la chaleur et permettant de chauffer à distance le voile primaire 18. Ce chauffage du voile primaire 18 permet de faire fondre la gaine 14 des éléments thermoliants qui baigne alors les fibres 8 ce qui permet, une fois refroidi, d'offrir une tenue mécanique au voile primaire 18.

Il convient de noter que ce chauffage du voile primaire 18 est réalisé à une température inférieure à la température de cuisson du matelas isolant dans une étuve lorsque les couches 4 sont superposées les unes sur les autres. En effet, la faible épaisseur du voile primaire 18 permet de chauffer ce voile primaire 18 à une température plus faible que celle nécessaire dans une étuve pour chauffer la superposition de couches dans son ensemble.

De manière alternative, le chauffage du voile primaire 18 peut, à titre d'exemple non limitatif de l'invention, être réalisé par un dispositif émetteur de micro-ondes ou par un tapis de convoyeur chauffant.

Le voile primaire 18 atteint ensuite le dispositif de nappage 36, dans lequel un élément pendulaire 38 est apte à déposer en couches 4 successives sur un deuxième convoyeur 40 ledit voile primaire 18. Le dépôt du voile primaire 18 sur le deuxième convoyeur 40 est réalisé pour obtenir des couches 4 conformes à ce qui a été décrit précédemment. Le deuxième convoyeur 40 se déplace dans une direction parallèle à l'axe L. L'élément pendulaire 38 est apte à déposer le voile primaire 18 sur le deuxième convoyeur 40 de façon régulière selon une direction perpendiculaire à la direction dans laquelle se déplace le deuxième convoyeur 40.

Le voile primaire 18 présente sur le premier convoyeur 32 un premier bord d'extrémité latérale et un deuxième bord d'extrémité latérale, ces bords d'extrémités latérales s'étendant sensiblement parallèlement à la direction d'avancement du premier convoyeur 32. Le voile primaire 18 est déposé par l'élément pendulaire 38 de telle sorte que le premier bord d'extrémité latérale forme une première extrémité 41 d'une couche 4 et le deuxième bord d'extrémité latérale forme une deuxième extrémité 43 d'une couche 4, opposée à la première extrémité 41. De plus, la première extrémité 41 est déposée sur une couche 4 préalablement déposée par l'élément pendulaire 38 et la deuxième extrémité 43 est déposée directement au contact du deuxième convoyeur 40.

En outre, le deuxième convoyeur 40 se déplace à une vitesse de déplacement modulable, à l'instar de la vitesse d'oscillation de l'élément pendulaire 38. Il convient de noter que la vitesse de déplacement du deuxième convoyeur 40, au même titre que la vitesse d'oscillation de l'élément pendulaire, a un impact sur le nombre de couches 4 superposées les unes sur les autres. La vitesse de déplacement du deuxième convoyeur 40 est avantageusement configurée pour que le matelas isolant 2 obtenue par la superposition de couches 4 présente une densité volumique comprise entre 5 kg.m⁻³ et 200 kg.m⁻³, préférentiellement comprise entre 5 kg.m⁻³et 40 kg.m⁻³. Cette densité est atteinte pour une superposition d'au moins 30 couches 4, et préférentiellement d'au moins 50 couches et d'encore plus préférentiellement d'au moins 70 couches, par le faible grammage compris entre 8 g.m⁻² et 30 g.m⁻² de chacune de ces couches 4. Ce faible grammage est lui-même obtenu par, notamment, la faible épaisseur de chacune des couches 4. Cette densité volumique est atteinte au regard des caractéristiques du voile primaire 18 indépendamment de la superposition des couches par le dispositif de nappage 36 ou par la superposition de couches découpées.

On comprend que le matelas isolant 2 est obtenu, dans ce mode de réalisation représenté, par un procédé de fabrication mettant en œuvre une première étape au cours de laquelle au moins un mélange de fibres 8 et d'éléments liants 10 est déposé sur le premier convoyeur 32 de sorte à former le voile primaire 18. Le dépôt du mélange est réalisé avec une teneur en éléments liants 10 dans le mélange conforme à ce qui a été décrit précédemment.

Tel que cela a pu être précisé précédemment, le matelas isolant est réalisé en sélectionnant au préalable le nombre de couches superposées et le grammage de chacune des couches, c'est à dire le grammage du voile primaire 18, pour obtenir en bout de process le grammage et l'épaisseur à respecter du matelas isolant 2.

Au cours d'une deuxième étape, le voile primaire 18 est déposé en couches successives superposées par le dispositif de nappage 36 sur le deuxième convoyeur 40 de sorte à former une superposition de couches 42. Cette superposition de couches 42 est, dans le mode de réalisation représenté, formée de la superposition de couches 4 et est entraîné par le deuxième convoyeur 40 jusqu'à une étuve, ici non représentée, au niveau de laquelle la superposition de couches 42 est chauffée pour obtenir un matelas isolant 2 conforme à l'invention. Ce chauffage de la superposition de couches 42 dans une étuve constitue une troisième étape du procédé de fabrication d'un matelas isolant 2. Au sein de l'étuve, ou précédemment à cette opération de chauffe de la superposition de couches dans l'étuve, la superposition de couches peut être comprimée pour obtenir, en sortie d'étuve, un matelas isolant 2 à l'épaisseur désirée. Ceci est notamment mis en œuvre lorsque le grammage choisi du voile primaire est tel que l'épaisseur moyen du voile primaire, mutlipliée par le nombre de couches, est supérieure à l'épaisseur du matelas isolant à respecter.

Il est à noter que le procédé de fabrication peut mettre en œuvre une deuxième étape intermédiaire au cours de laquelle le voile primaire 18 est transporté depuis le premier convoyeur 32 par un moyen distinct du deuxième convoyeur 40 pour être superposé en couches 4 conformément à ce qui a été décrit précédemment. Ce déplacement du voile primaire 18 est, le cas échéant, réalisé au moyen du voile support.

Au cours de la première étape, le dispositif de formage à air 16 est paramétré, que ce soit au niveau de la fréquence de distribution des fibres et des éléments liants dans le conduit 24, du débit de circulation de ces composants dans le conduit 24, de la vitesse de rotation des tambours 26 et/ou encore de la vitesse de déplacement du premier convoyeur 32, pour permettre l'obtention d'un voile primaire au grammage souhaité, ce grammage étant choisi pour l'obtention d'un grammage à respecter de la superposition de couches avec un nombre minimum de 30 couches.

Au cours de la deuxième étape, lorsque celle-ci est réalisée par le dispositif de nappage 36, la vitesse d'oscillation de l'élément pendulaire 38 et la vitesse du deuxième convoyeur 40 sont choisies pour permettre la superposition de couches avec le nombre de couches approprié, au moins égal à 30 couches.

L'invention telle que décrite atteint bien le but qu'elle s'était fixée en proposant un matelas isolant formé d'une pluralité de couches de fibres superposées les unes sur les autres et dans lequel les performances d'isolation sont améliorées par un nombre de couches de fibres minérales importantes permettant d'immobiliser de façon stable une quantité importante d'air, tout en limitant la formation de ponts thermiques dans l'épaisseur du matelas isolant.

## Revendications

1. Matelas isolant (2) formé d'une superposition de couches (4) formées d'une pluralité de fibres (8) minérales et/ou végétales liées les unes aux autres au moyen d'un élément liant (10), le matelas isolant (2) étant formé d'une superposition d'au moins 30 couches (4).

2. Matelas isolant (2) selon la revendication 1, dans lequel l'élément liant (10) est formé d'éléments thermoliants.

3. Matelas isolant (2) selon la revendication 2 et comprenant moins de 15% d'éléments thermoliants.

4. Matelas isolant (2) selon la revendication 3, et comprenant entre 3% et 15% d'éléments thermoliants.

5. Matelas isolant (2) selon la revendication 3, et comprenant entre 4% et 10% d'éléments thermoliants.

6. Matelas isolant (2) selon l'une quelconque des revendications 1 à 5, dans lequel le matelas isolant (2) est formé d'une superposition d'au moins 50 couches (4).

7. Matelas isolant (2) selon l'une quelconque des revendications 1 à 6, dans lequel chaque couche du matelas isolant (2) présente un grammage compris en 8 g.m⁻² et 30 g.m⁻².

8. Matelas isolant (2) selon l'une quelconque des revendications 1 à 7, dans lequel chaque couche (4) présente une épaisseur comprise entre 0,05 mm et 2 mm.

9. Matelas isolant (2) selon la revendication 8, dans lequel chaque couche (4) présente une épaisseur comprise entre 0,1 mm et 1 mm.

10. Matelas isolant selon l'une quelconque des revendications 1 à 9, dans lequel les fibres (8) présentent une longueur maximale de 20 mm.

11. Matelas isolant (2) selon l'une quelconque des revendications 1 à 10, dans lequel chaque couche (4) superposée est inclinée, par rapport à un plan perpendiculaire à une direction selon laquelle est mesurée l'épaisseur du matelas isolant (2), d'un angle d'orientation (α) inférieur à 10°.

12. Procédé de fabrication d'un matelas isolant (2) selon l'une quelconque des revendications 1 à 11, le matelas isolant étant obtenu par la superposition d'au moins 30 couches, le procédé de fabrication mettant en œuvre :
- au moins une première étape au cours de laquelle au moins un mélange de fibres (8) et d'éléments liants (10) est déposé sur un premier convoyeur (32) par un dispositif de formage à air (16) de sorte à former un voile primaire (18),
- au moins une deuxième étape au cours de laquelle le voile primaire (18) est déposé en couches (4) successives superposées par un dispositif de nappage (36) sur un deuxième convoyeur (40) de sorte à former une superposition de couches (42),
- au moins une troisième étape au cours de laquelle la superposition de couches (42) est chauffée dans une étuve de sorte former le matelas isolant (2).

13. Procédé de fabrication selon la revendication 12, dans lequel au cours de la première étape, le voile primaire (18) est déposé sur un voile support (30) présent sur le premier convoyeur (32).

14. Procédé de fabrication selon l'une quelconque des revendications 12 et 13, dans lequel le procédé de fabrication met en œuvre une étape antérieure à la deuxième étape au cours de laquelle le voile primaire (18) est chauffé par un dispositif de chauffage (37).

## Patentansprüche

1. Isoliermatte (2), die durch Übereinanderlegen von Lagen (4) gebildet wird, die aus einer Vielzahl von mineralische und/oder pflanzliche Fasern (8) bestehen, die mittels eines Bindemittels (10) miteinander verbunden sind, wobei die Dämmmatte (2) aus mindestens 30 Lagen (4) besteht.

2. Die Isoliermatte (2) nach Anspruch 1, wobei das Bindemittels (10) aus Wärmebindemitteln besteht.

3. Die Isoliermatte (2) nach Anspruch 2, die weniger als 15 % Wärmebindemittel enthält.

4. Die Isoliermatte (2) nach Anspruch 3, die zwischen 3% und 15% Wärmebindemittel enthält.

5. Die Isoliermatte (2) nach Anspruch 3, die zwischen 4% und 10% Wärmebindemittel enthält.

6. Die Isoliermatte (2) nach einem der Ansprüche 1 bis 5, wobei die Isoliermatte (2) aus mindestens 50 Lagen (4) besteht.

7. Die Isoliermatte (2) nach einem der Ansprüche 1 bis 6, wobei jede Lage der Isoliermatte (2) ein Flächengewicht zwischen 8 g/ ^{m²} und 30 g/ ^{m²} aufweist .

8. Die Isoliermatte (2) nach einem der Ansprüche 1 bis 7, wobei jede Lage (4) eine Dicke zwischen 0,05 mm und 2 mm aufweist.

9. Die Isoliermatte (2) nach Anspruch 8, wobei jede Lage (4) eine Dicke zwischen 0,1 mm und 1 mm aufweist.

10. Die Isoliermatte nach einem der Ansprüche 1 bis 9, wobei die Fasern (8) eine maximale Länge von 20 mm aufweisen.

11. Die Isoliermatte (2) nach einem der Ansprüche 1 bis 10, wobei jede der geschichteten Lagen (4) gegenüber einer Ebene, die senkrecht zu der Richtung steht, nach der die Dicke der Isoliermatte (2) gemessen wird, um einen Orientierungswinkel (α) von weniger als 10° geneigt ist.

12. Ein Herstellungsverfahren für eine Isoliermatte (2) nach einem der Ansprüche 1 bis 11, wobei die Isoliermatte durch Übereinanderlegen von mindestens 30 Lagen erhalten wird, wobei das Herstellungsverfahren Folgendes umfasst:
- mindestens ein erster Schritt, bei dem mindestens eine Mischung aus Fasern (8) und Bindemittelelementen (10) mittels einer Luftformvorrichtung (16) auf ein erstes Förderband (32) aufgebracht wird, um eine Primärbahn (18) zu bilden.
- mindestens ein zweiter Schritt, bei dem die primäre Bahn (18) mittels einer Bahnformvorrichtung (36) auf einem zweiten Förderband (40) in übereinanderliegenden, aufeinanderfolgenden Lagen (4) abgelagert wird, um einen Lagenaufbau (42) zu bilden.
- mindestens ein Drittel des Arbeitsschritts, bei dem die Lagen (42) im Ofen erhitzt werden, um die Isoliermatte (2) zu bilden.

13. Das Herstellungsverfahren nach Anspruch 12, wobei im ersten Schritt die Primärbahn (18) über eine auf dem ersten Förderband (32) befindliche Stützbahn (30) gelegt wird.

14. Das Herstellungsverfahren nach einem der Ansprüche 12 und 13, wobei das Herstellungsverfahren vor dem zweiten Schritt einen Schritt vorsieht, bei dem die Primärbahn (18) mit einer Heizvorrichtung (37) erhitzt wird.

## Claims

1. An insulation mat (2) formed by laying up layers (4) formed of a plurality of mineral and/or plant fibres (8) bonded together by means of a binder element (10), the insulation mat (2) being formed by laying up at least 30 layers (4).

2. The insulation mat (2) according to claim 1, wherein the binder element (10) is formed of heat-binder elements.

3. The insulation mat (2) according to claim 2, and comprising less than 15% of heat-binder elements.

4. The insulation mat (2) according to claim 3, and comprising between 3% and 15% of heat-binder elements.

5. The insulation mat (2) according to claim 3, and comprising between 4% and 10% of heat-binder elements.

6. The insulation mat (2) according to any one of claims 1 to 5, wherein the insulation mat (2) is formed by laying up at least 50 layers (4).

7. The insulation mat (2) according to any one of claims 1 to 6, wherein each layer of the insulation mat (2) has a basis weight comprised between 8 g.m⁻² and 30 g.m⁻².

8. The insulation mat (2) according to any one of claims 1 to 7, wherein each layer (4) has a thickness comprised between 0.05 mm and 2 mm.

9. The insulation mat (2) according to claim 8, wherein each layer (4) has a thickness comprised between 0.1 mm and 1 mm.

10. The insulation mat according to any one of claims 1 to 9, wherein the fibres (8) have a maximum length of 20 mm.

11. The insulation mat (2) according to any one of claims 1 to 10, wherein each laid up layer (4) is inclined, with respect to a plane perpendicular to a direction according to which the thickness of the insulation mat (2) is measured, by an angle of orientation (α) of less than 10°.

12. A manufacturing method for manufacturing an insulation mat (2) according to any one of claims 1 to 11, the insulation mat being obtained by laying up at least 30 layers, the manufacturing method implementing:
- at least one first step during which at least one mixture of fibres (8) and of binder elements (10) is deposited on a first conveyor (32) by an air forming device (16) so as to form a primary web (18),
- at least one second step during which the primary web (18) is deposited in superimposed successive layers (4) by a sheet-forming device (36) on a second conveyor (40) so as to form a lay-up of layers (42),
- at least one third step during which the lay-up of layers (42) is heated in an oven so as to form the insulation mat (2).

13. The manufacturing method according to claim 12, wherein, during the first step, the primary web (18) is deposited over a support web (30) present on the first conveyor (32).

14. The manufacturing method according to any one of claims 12 and 13, wherein the manufacturing method implements a step prior to the second step during which the primary web (18) is heated by a heating device (37).
